# EUROPEAN PATENT APPLICATION

(11) **EP 2 732 792 A1**
(43) Date of publication of application: **21.05.2014**
(21) Application number: 12812092.0
(22) Date of filing: 11.07.2012
(51) Int. Cl.: A61C 8/00

(54) **ATTACHMENT FOR DENTAL PROSTHESES**

(30) Priority: 12.07.2011 ES 201131174 P
(71) Applicant: Dentisel, S.L., 08520 Les Franqueses del Valles (Barcelona) (ES)
(72) Inventor: COSTA CODINA, Xavier, E-08520 Les Franqueses del Valles (Barcelona) (ES)
(74) Representative: Carpintero Lopez, Francisco
(86) International application number: PCT/ES2012/070518
(87) International publication number: WO 2013/007856

(57) **Abstract**

The present invention relates to an abutment (1) for dental prostheses comprising a base (2) and a cylinder (3), where the cylinder (3) is externally coupled to a dental prosthesis, and where at least the cylinder (3) externally comprises a first plurality of three-dimensional retaining elements (3a) configured for preventing the translational and rotational movement of said dental prosthesis; obtaining a maximum fixing of said abutment (1) both on the dental implant (4) and on the dental prosthesis, assuring a proper fixing between respective elements.

## Description

### Technical Field of the invention

The present invention relates to an abutment for dental prostheses which is encompassed in the field of medicine, and specifically in the field of implant dentistry.

The purpose of this abutment for dental prosthesis is to attach a dental prosthesis to the body of the anchored implant, preferably to the jaw bone of a patient, such that it prevents the dental prosthesis from moving vertically, rotating and breaking due to external traction, resulting mainly from the chewing forces exerted on it; and all this with an easily made abutment having a simple configuration and a great industrial applicability in the dentistry sector.

### Background of the Invention

By way of introduction, current implant techniques recommend the placement of prosthesis immediately after surgery by means of various intermediate abutments attaching the prosthesis to the implant or to a definitive prosthesis post.

These abutments can be made from different materials and can have several shapes on their outer surface for the purpose of retaining the relining material of the prosthesis in vertical and occasionally rotational traction.

Therefore, in view of the aforementioned drawback, there is a need for a new dental implant abutment that allows a maximum fixing both on the dental implant and on the dental prosthesis, assuring a proper fixing between respective elements, since the dental implant is usually fixed to the jaw bone and assures a stationary fixed position; and where additionally the abutment is made in a simple manner that does not make the product thus obtained more expensive in relation to the abutments existing in the current state of the art.

### Description of the Invention

The present invention relates to an abutment for dental prostheses comprising the following technical features:
- a base, and
- a cylinder, where the cylinder is externally coupled to a dental prosthesis, and where at least the cylinder externally comprises a first plurality of three-dimensional retaining elements configured for preventing the translational and rotational movement of said dental prosthesis.

This first plurality of three-dimensional retaining elements is located at least along the periphery of the cylinder, and they are therefore coupled to the dental prosthesis, securing it and preventing it from both moving longitudinally and rotating when the prosthesis is subjected to chewing forces.

Additionally, it is observed that said first plurality of three-dimensional retaining elements is intended for retaining and securing, therefore the following possibilities in terms of its geometric configuration are contemplated, all the possibilities being complementary to one another because different geometries can co-exist depending on where they are located with respect to said cylinder:
1. The first possibility contemplates said first plurality of three-dimensional retaining elements respectively comprising a spherical geometric configuration.
2. The second possibility contemplates said first plurality of three-dimensional retaining elements respectively comprising a frustoconical geometric configuration.
3. The second possibility contemplates said first plurality of three-dimensional retaining elements respectively comprising a polyhedral geometric configuration, the attachment of which to the cylinder is narrower than the outermost portion of said three-dimensional retaining element, i.e., the gap existing between two retaining elements is similar to a dovetail.

In a preferred embodiment, the possibility of the base externally comprising a second plurality of three-dimensional retaining elements is contemplated; where the possibilities described above in relation to the geometry of the first plurality of three-dimensional retaining elements can be extrapolated to said second plurality of three-dimensional retaining elements; and where this surface extension of the retaining elements allows improving the fixing between the dental prosthesis and the dental implant.

The possibility of the base comprising a conical geometry, the smaller base of which is in contact with the cylinder, is contemplated; said geometry allows coupling to the dental prosthesis more easily, allowing the base to extend into and externally grip the dental implant.

In relation to the couplings of the abutment for dental prostheses object of the invention with the dental prosthesis and with the dental implant, the following possibility is contemplated:
- The base comprises a hollow inner cavity comprising a retaining and coupling element for retaining and coupling to a dental implant, where said cavity is preferably a through hole; and
- the cylinder comprises a hollow inner cavity where a set screw of a dental implant is coupled; where said hollow cavity is again preferably a through hole and contacts the hollow cavity of the base.

The hollow cavity of the base preferably comprises:
- a elastic retaining system that can be coupled to a post of the dental prosthesis by cementing or screwing; or
- an internal or external connection system for connecting to said dental implant.

Furthermore, the hollow cavity of the cylinder preferably comprises at least one retaining element for retaining a screw of the dental implant.

Finally, and in relation to the type of material of the abutment for dental prostheses object of the invention, the possibilities of it comprising the following materials are contemplated:
- a plastic material;
- a ceramic material; or
- a metallic material.

Furthermore, where said abutment can be relined with resin or another auto- or photopolymerizable material directly in the patient's mouth or indirectly in a dental prosthesis laboratory.

Therefore, according to the described invention, the abutment for dental prostheses object of the invention is a significant novelty in dental abutments with respect to those used today since it allows a maximum fixing both on a dental implant and on a dental prosthesis, assuring a proper fixing between respective elements; and where additionally the abutment is made in a simple manner that does not make the product thus obtained more expensive in relation to the abutments existing in the current state of the art.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and nonlimiting character:
Figure 1 shows a schematic perspective view of the abutment for dental prostheses object of the invention.
Figure 2 shows a schematic plan view of the abutment for dental prostheses shown in Figure 1 with an A-A cross-section.
Figure 3 shows a schematic view of the A-A cross-section shown in Figure 2.
Figure 4 shows a detail of the plurality of three-dimensional retaining elements of the abutment for dental prostheses object of the invention.

### Preferred Embodiment of the Invention

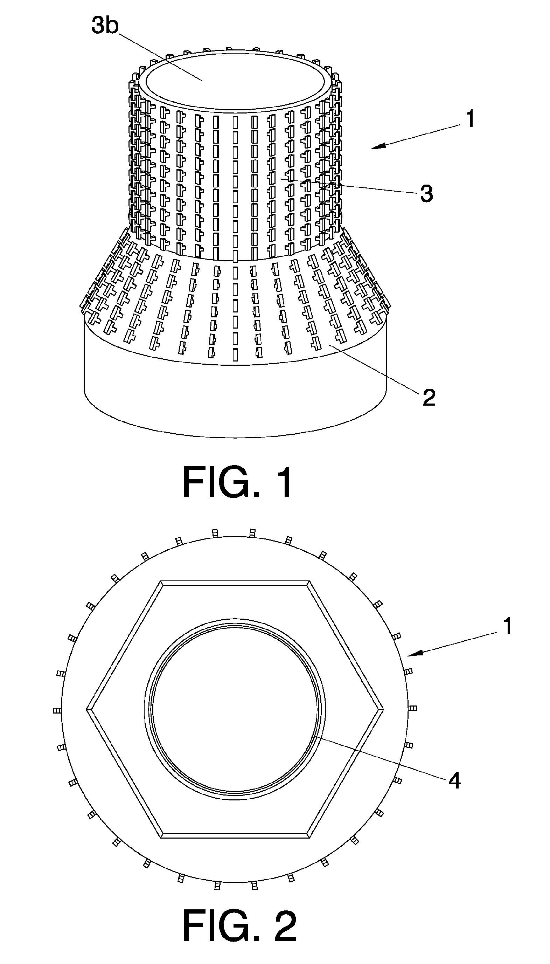

As can be seen in Figures 1 to 4, the abutment (1) for dental prostheses described in the invention comprises:
- a base (2), and
- a cylinder (3), where the cylinder (3) is externally coupled to a dental prosthesis, and where both the base (2) and the cylinder (3) externally comprise a first plurality of three-dimensional retaining elements (3a) and a second plurality of three-dimensional retaining elements (2a), respectively, with respect to the cylinder (3) and the base (2).

Said three-dimensional retaining elements (2a, 3a) are configured for preventing the translational and rotational movement of the dental prosthesis when exerting chewing forces.

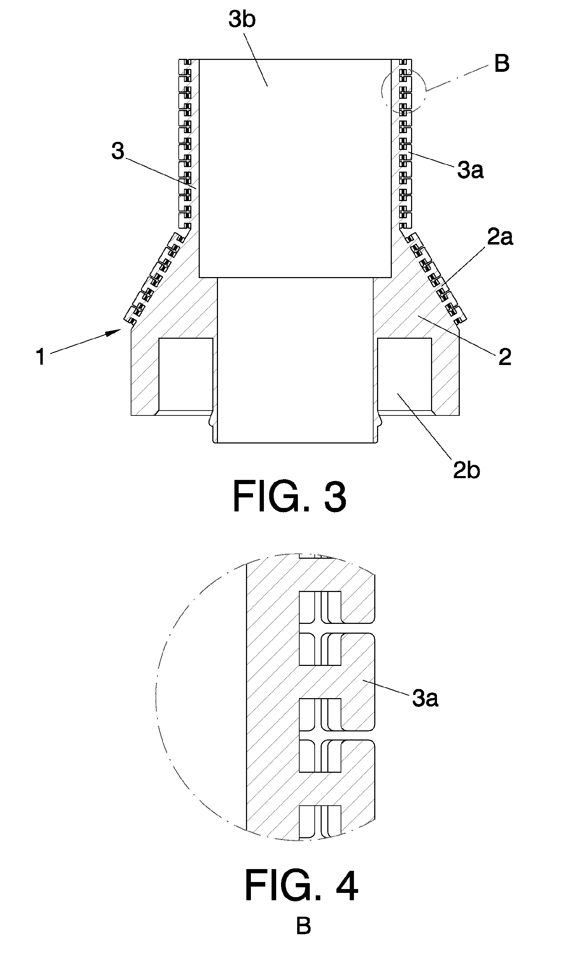

Likewise, as seen in Figures 1 and 3, the base (2) comprises a conical geometry, the smaller base of which is in contact with the cylinder (3) and allows coupling to a dental implant (4), such that:
- the base (2) comprises a hollow inner cavity (2b) comprising a retaining and coupling element for retaining and coupling to said dental implant (4); and
- the cylinder (3) comprises a hollow inner cavity (3b) where a set screw of a dental implant is coupled.

Furthermore, Figure 4 particularly shows the detail that both the first plurality of three-dimensional retaining elements (3a) and the second plurality of three-dimensional retaining elements (2a) respectively comprise a polyhedral geometric configuration the attachment of which to the cylinder (3) is narrower than the outermost portion of said three-dimensional retaining element (3a).

In view of this description and set of drawings, the person skilled in the art will understand that the embodiments of the invention which have been described can be combined in many ways within the object of the invention. The invention has been described according to several preferred embodiments thereof, but for the person skilled in the art it will be evident that multiple variations can be introduced in said preferred embodiments without exceeding the object of the claimed invention.

## Claims

1. Abutment (1) for dental prostheses, **characterized in that** it comprises a base (2) and a cylinder (3), where the cylinder (3) is externally coupled to a dental prosthesis, and where at least the cylinder (3) externally comprises a first plurality of three-dimensional retaining elements (3a) configured for preventing the translational and rotational movement of said dental prosthesis.

2. Abutment (1) for dental prostheses according to claim 1, **characterized in that** the base (2) externally comprises a second plurality of three-dimensional retaining elements (2a).

3. Abutment (1) for dental prostheses according to any of the preceding claims, **characterized in that** the base (2) comprises a conical geometry, the smaller base of which is in contact with the cylinder (3).

4. Abutment (1) for dental prostheses according to any of the preceding claims, **characterized in that** the base (2) comprises a hollow inner cavity (2b) comprising a retaining and coupling element for retaining and coupling to a dental implant (4).

5. Abutment (1) for dental prostheses according to any of the preceding claims, **characterized in that** the cylinder (3) comprises a hollow inner cavity (3b) where a set screw of a dental implant is coupled.

6. Abutment (1) for dental prostheses according to any of the preceding claims, **characterized in that** the first plurality of three-dimensional retaining elements (3a) respectively comprise a spherical geometric configuration.

7. Abutment (1) for dental prostheses according to any of claims 1 to 5, **characterized in that** the first plurality of three-dimensional retaining elements (3a) respectively comprise a frustoconical geometric configuration.

8. Abutment (1) for dental prostheses according to any of claims 1 to 5, **characterized in that** the first plurality of three-dimensional retaining elements (3a) respectively comprise a polyhedral geometric configuration the attachment of which to the cylinder (3) is narrower than the outermost portion of said three-dimensional retaining element (3a).

9. Abutment (1) for dental prostheses according to any of the preceding claims, **characterized in that** it comprises a plastic material.

10. Abutment (1) for dental prostheses according to any of claims 1 to 8, **characterized in that** it comprises a metallic material.

11. Abutment (1) for dental prostheses according to any of claims 1 to 8, **characterized in that** it comprises a ceramic material.
